# EUROPÄISCHE PATENTSCHRIFT

(11) **EP 4 444 565 B1**
(45) Veröffentlichungstag und Bekanntmachung des Hinweises auf die Patenterteilung: **06.08.2025**
(21) Anmeldenummer: 22789592.7
(22) Anmeldetag: 28.09.2022
(51) Int. Cl.: B60K 35/10, B60K 35/28

(54) **VERFAHREN, COMPUTERPROGRAMM, VORRICHTUNG UND FAHRZEUG ZUR ANZEIGE VON KONTROLLINFORMATIONEN IM SICHTFELD EINES FAHRERS**
METHOD, COMPUTER PROGRAM, DEVICE AND VEHICLE FOR DISPLAYING CONTROL INFORMATION IN THE FIELD OF VISION OF A DRIVER
PROCÉDÉ, PROGRAMME INFORMATIQUE, DISPOSITIF ET VÉHICULE PERMETTANT D'AFFICHER DES INFORMATIONS DE COMMANDE DANS LE CHAMP DE VISION D'UN CONDUCTEUR

(30) Priorität: 08.12.2021 DE 102021132270
(43) Veröffentlichungstag der Anmeldung: 16.10.2024
(73) Patentinhaber: Bayerische Motoren Werke Aktiengesellschaft, 80809 München (DE)
(72) Erfinder: PFANNSTIEL, Jochen, 81241 München (DE)
(86) Internationale Anmeldenummer: PCT/EP2022/076902
(87) Internationale Veröffentlichungsnummer: WO 2023/104366

(56) Entgegenhaltungen:
- EP-A1- 1 636 560
- EP-B1- 1 636 560
- WO-A1-2016/068185
- US-A1- 2020 391 593

## Beschreibung

Ausführungsbeispiele der vorliegenden Erfindung beziehen sich auf ein Verfahren, ein Computerprogramm, eine Vorrichtung für ein Fahrzeug und ein Fahrzeug zur Anzeige von Kontrollinformationen im Sichtfeld eines Fahrers, insbesondere aber nicht ausschließlich, auf ein Konzept zur Darstellung von Kontrollinformationen in übersichtlicher und intuitiv verständlicher Art und Weise im Sichtfeld eines Fahrers eines Fahrzeugs bei effektiver Nutzung der dafür vorgesehenen Darstellungsfläche.

Defekte oder Probleme bei einem Fahrzeug sind von außen oft nicht erkennbar. Aus diesem Grund sind Kontrollleuchten in Fahrzeugen integriert worden. Sie dienen dazu, den Fahrzeugführer auf ein Problem bzw. einen Defekt am Fahrzeug hinzuweisen oder ihn präventiv zu warnen. Zusätzlich werden Hinweise gegeben, die z.B. auf das Fahrverhalten hinweisen, wie beispielsweise "Spur halten". Die Farbe der Kontrollleuchte gibt einen Hinweis darauf, ob es sich um einen Defekt oder einen Hinweis handelt. In der Regel hört das Licht der Kontrollleuchte auf zu leuchten, wenn das Problem behoben ist, oder dem Hinweis Folge geleistet wurde. Die Kontrollleuchten sind üblicherweise auf dem Armaturenbrett des Fahrzeugs angeordnet. Beispielsweise wird einer einzelnen Kontrollleuchte ein fester Platz zugewiesen, wo nur diese Kontrollleuchte erscheinen kann.

Insbesondere in moderneren Fahrzeugen gibt es eine Vielzahl von verschiedenen Informationen, die in Form von Kontrollsymbolen, Kontrollleuchten, Text, usw., einem Fahrer eines Fahrzeugs präsentiert werden. Mit zunehmender Anzahl von Einzelinformationen kann eine Ablenkungsgefahr für einen Fahrer steigen. Darüber hinaus ist der Fahrer gewohnt bestimmte Kontrollinformationen an bestimmten Stellen im Sichtfeld wahrzunehmen, sodass traditionell bestimmten Kontrollleuchten bestimmte Orte im Cockpit von Fahrzeugen zugeordnet werden. Es besteht eine Tendenz den Anzeigebereich immer größer zu machen bzw. immer mehr Information anzuzeigen. Damit einher kann die Gefahr gehen, dass es zunehmend zu einer Unübersichtlichkeit kommt, weil die einzelnen Anzeigen immer kleiner werden oder weiter verstreut angeordnet werden. Der Platzbedarf steigt demnach beispielsweise mit zunehmender Anzahl von Kontrollleuchten. Darüber hinaus kann eine Zusammengehörigkeit zwischen textuellen Fehlermeldungen ("Check Controls") und korrespondierender Kontrollleuchte aufgrund örtlicher Distanz weniger deutlich werden.

Es besteht daher ein Bedarf daran, ein verbessertes Konzept zur Anzeige von Kontrollinformation im Sichtfeld eines Fahrers bereitzustellen. Diesem Bedarf tragen die Gegenstände der anhängigen unabhängigen Patentansprüche Rechnung.

Patent Literatur EP 1 636 560 A1 offenbart, wenn ein Fahrzeug (10) feststellt, dass eine Störung aufgetreten ist, überträgt es Informationen über das Aufleuchten der Alarmlampe, Fahrzeug-ID-Informationen und Benutzeridentifikationsinformationen an ein Zentrum (20). Die Zentrale (20) überträgt die empfangenen Informationen über das Aufleuchten der Alarmlampe an einen Autohauscomputer (30) bei einem Autohändler. Die Zentrale (20) erhält dann vom Autohändler übertragene Informationen über Gegenmaßnahmen bei Anomalien, bereitet eine Anomalienmeldung vor und überträgt die Anomalienmeldung an das Fahrzeug (10). Das Fahrzeug (10) benachrichtigt einen Benutzer über die Anomalienmeldung und reserviert den Service beim Autohändler durch Betätigung einer Reservierungstaste durch den Benutzer. Mit der Reservierung sendet die Zentrale (20) eine Anfrage zur Übertragung einer Störung an das Fahrzeug (10). Das Fahrzeug (10) sammelt Fehlerinformationen als Antwort auf die Fehlerinformationsübertragungsanforderung und überträgt die Fehlerinformationen an die Zentrale (20). Das Zentrum (20) überträgt detaillierte Abnormalitäts-Gegenmaßnahmeninformationen, die vom Autohändler übertragen wurden, an das Fahrzeug (10).

Patent Literatur US 2020/391593 A1 offenbart eine Anzeigevorrichtung in einem Fahrzeug umfassend: eine Kommunikationseinheit, eine Anzeige und eine Steuereinheit. Die Kommunikationseinheit kann Fahrzeugfahrinformationen empfangen. Der Prozessor kann auf der Grundlage der empfangenen Fahrzeugfahrinformationen einen Geschwindigkeitsbereich berechnen und die Anzeige so steuern, dass ein grafisches Objekt, das den berechneten Geschwindigkeitsbereich darstellt, auf der Anzeige angezeigt wird.

Ausführungsbeispiele basieren auf der Erkenntnis, dass bei den konventionellen Anzeigekonzepten keine Information zur Auftrittsreihenfolge von Fehlern vorhanden ist und daher eine Kausalitätskette auch nicht ableitbar ist. Darüber hinaus sind frei nutzbare Displayflächen verfügbar. Ausführungsbeispiele basieren auf dem Kerngedanken, dass Kontrollleuchten dynamisch in einem gemeinsamen Bereich angezeigt werden können und sich gegenseitig verschieben lassen. Die chronologische Abfolge kann über die Reihenfolge der Anzeigen entscheiden, sodass diese Information auch übermittelt werden kann. Beispielsweise sieht ein Fahrer eine erste auftretende Kontrollleuchte (unabhängig davon welche es ist) immer am gleichen - bereits gelernten - erwartungskonformen Ort. Aufgrund der Statistik ist es unwahrscheinlich, dass alle Kontrollleuchten gleichzeitig auftreten, weshalb eine Displayfläche nach den ersten 2-3 Kontrollleuchten i.d.R. frei für andere Anzeigen wie z.B. Drehzahlmesser o.ä. genutzt werden kann. Es entsteht dadurch eine Art Bündelgewinn und zumindest statistisch kann eine gleiche Anzahl von Kontrollleuchten auf einer kleineren Fläche angezeigt werden.

Ausführungsbeispiele schaffen ein Verfahren zur Anzeige von Kontrollinformationen im Sichtfeld eines Fahrers eines Fahrzeugs. Das Verfahren umfasst ein Anzeigen von zwei oder mehr Kontrollinformationen in einer Anordnung von benachbarten Anzeigefeldern und ein Anzeigen einer zeitlichen Relation eines Auftretens der zwei oder mehr Kontrollinformationen über Positionen der zwei oder mehr Kontrollinformationen innerhalb der Anordnung. Ausführungsbeispiele können einem Fahrer so ermöglichen die zeitliche Reihenfolge des Auftretens der jeweiligen Ereignisse aus der Anzeige abzulesen.

In einigen Ausführungsbeispielen kann ferner ein Anzeigen einer jüngsten Kontrollinformation an einem Ende der Anordnung und Anzeigen einer ältesten Kontrollinformation an einem anderen Ende der Anordnung. Dadurch wird die Aktualität der jeweiligen Kontrollinformation für den Fahrer auf den ersten Blick wahrnehmbar.

Beispielsweise kann das Anzeigen der ältesten oder der jüngsten Kontrollinformation der zwei oder mehr Kontrollinformationen an immer der gleichen absoluten Position in dem Sichtfeld des Fahrers erfolgen. So kann die aktuellste oder auch die schon am längsten bestehende Kontrollinformation an immer der gleichen Stelle bzw. an immer dem gleichen Ort im Sichtfeld des Fahrers angezeigt werden.

In weiteren Ausführungsbeispielen kann ein Löschen einer Anzeige einer nicht mehr relevanten Kontrollinformation aus der Anordnung erfolgen. Demzufolge werden irrelevante Kontrollinformationen auch wieder entfernt, sodass diese einen Fahrer nicht weiter ablenken können. Darüber hinaus kann das Verfahren zumindest in manchen Ausführungsbeispielen ein Schließen einer durch das Löschen einer Anzeige entstandenen Lücke in der Anordnung durch dynamisches Verschieben der verbleibenden Kontrollinformationen umfassen. Dadurch kann eine lückenlose Darstellung innerhalb der Anordnung erreicht werden.

In einigen Ausführungsbeispielen kann auch ein Aufbauen der dargestellten Kontrollinformationen über die benachbarten Anzeigefelder sukzessive in einer durch die Anordnung der Anzeigefelder vordefinierten Richtung erfolgen. Dadurch kann eine Art Fortschrittanzeige erreicht werden, die sowohl die Anzahl als auch die Reihenfolge der Kontrollinformationen leicht erfassbar darstellt.

Beispielsweise kann ein Anzeigen einer Kontrollinformation durch Darstellen eines für die Kontrollinformation typischen Grafiksymbols erfolgen. Dadurch kann die jeweilige Information aufwandsgünstig durch intuitiv verständliche Grafiksymbole an einen Fahrer übermittelt werden.

In Ausführungsbeispielen können die Kontrollinformationen ein oder mehrere Elemente der Gruppe von einem Reifendruckwarnsignal, einem Warnsignal eines Antiblockiersystems, einem Airbag-Warnsignal, einem Motorwarnsignal, einem Steuerungswarnsignal, einem Abstandswarnsignal, einem Leistungswarnsignal, einem Batteriewarnsignal und einem Handbremsenwarnsignal umfassen. Dadurch können einem Fahrer leicht verständlich die Anzahl, die Art und auch die Reihenfolge/Aktualität von Kontrollinformationen angezeigt werden.

Ausführungsbeispiele schaffen auch ein Computerprogramm zur Durchführung eines der hierin beschriebenen Verfahren, wenn das Computerprogramm auf einem Computer, einem Prozessor, oder einer programmierbaren Hardwarekomponente abläuft.

Ein weiteres Ausführungsbeispiel ist eine Vorrichtung für ein Fahrzeug mit einer Kontrolleinheit, die zur Durchführung eines der hierin beschriebenen Verfahren ausgebildet ist. Ausführungsbeispiele schaffen darüber hinaus ein Fahrzeug mit einer Vorrichtung wie hierin beschrieben.

Ausführungsbeispiele werden nachfolgend bezugnehmend auf die beiliegenden Figuren näher erläutert. Es zeigen:
Fig. 1 eine schematische Darstellung eines Ausführungsbeispiels eines Verfahrens zur Anzeige von Kontrollinformationen im Sichtfeld eines Fahrers eines Fahrzeugs;
Fig. 2 ein Blockdiagram eines Ausführungsbeispiels einer Vorrichtung für ein Fahrzeug und eines Ausführungsbeispiels eines Fahrzeugs;
Fig. 3 eine Anordnung von Anzeigefeldern in einem Ausführungsbeispiel; und
Fig. 4 eine schematische Darstellung zum Aufbau einer Anzeige von mehreren Kontrollinformationen in einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein. Optionale Merkmale sind mit gestrichelten Linien dargestellt.

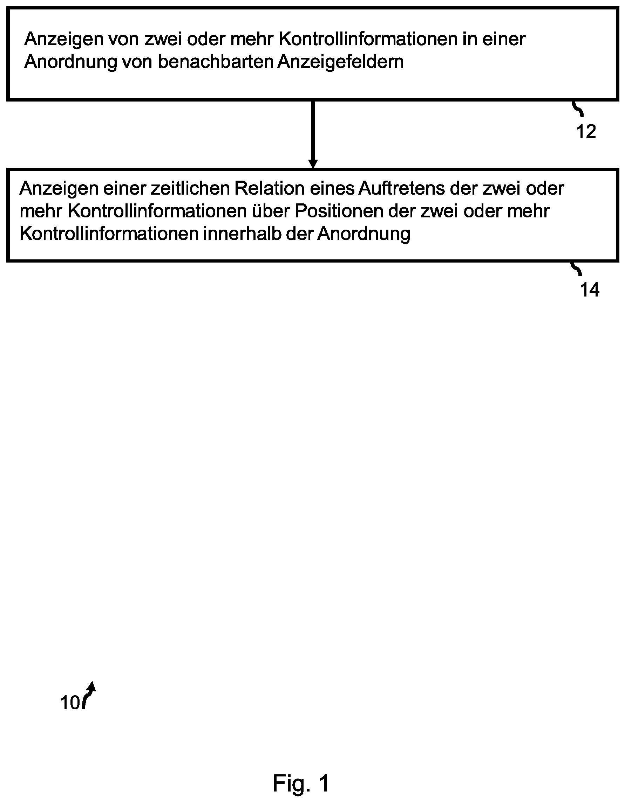

Fig. 1 zeigt eine schematische Darstellung eines Ausführungsbeispiels eines Verfahrens 10 zur Anzeige von Kontrollinformationen im Sichtfeld eines Fahrers eines Fahrzeugs. Im Sichtfeld des Fahrers befinden sich üblicherweise die Instrumente und Anzeigen des Fahrzeugs im laufenden Betrieb. Dazu können verschiedene Anzeigen verwendet werden, wie beispielsweise ein Headup-Display (Projektion an/gegen die Windschutzscheibe) oder ein Display allgemein, das im Armaturenbrett oder im Cockpit des Fahrzeugs im Sichtfeld des Fahrers verbaut sein kann. Wie die Fig. 1 zeigt, umfasst das Verfahren ein Anzeigen 12 von zwei oder mehr Kontrollinformationen in einer Anordnung von benachbarten Anzeigefeldern und ein Anzeigen 14 einer zeitlichen Relation eines Auftretens der zwei oder mehr Kontrollinformationen über Positionen der zwei oder mehr Kontrollinformationen innerhalb der Anordnung. Beispielsweise kann ein Anzeigen einer jüngsten Kontrollinformation an einem Ende der Anordnung und Anzeigen einer ältesten Kontrollinformation an einem anderen Ende der Anordnung erfolgen. Die Anordnung kann sich dabei entlang eines vordefinierten Verlaufs erstrecken, wie beispielsweise eines geradlinigen oder gekrümmten Verlaufs. So kann dann eine Folge von aufeinanderfolgenden Kontrollinformationen entlang der Anordnung angezeigt werden.

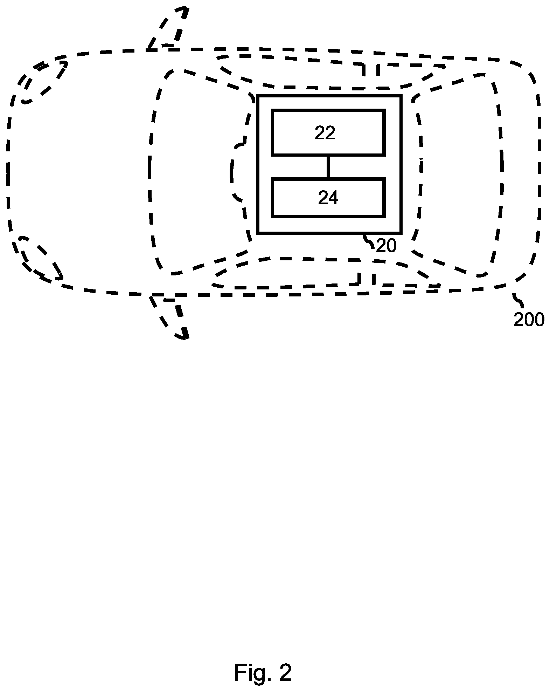

Fig. 2 illustriert ein Blockdiagram eines Ausführungsbeispiels einer Vorrichtung 20 für ein Fahrzeug und eines Ausführungsbeispiels eines Fahrzeugs 200. Das Fahrzeug 200 ist in gestrichelten Linien dargestellt, da es aus Sicht der Vorrichtung 20 optional ist. Vorrichtung 20 für das Fahrzeug 200 umfasst eine Kontrolleinheit 24, die zur Durchführung eines der hierin beschriebenen Verfahren 10 ausgebildet ist. Das Fahrzeug 200 umfasst ein Ausführungsbeispiel der Vorrichtung 20.

Die Vorrichtung 20 kann in Ausführungsbeispielen ein oder mehrere Schnittstellen 22 umfassen, die mit der Kontrolleinheit oder dem Kontrollmodul 24, gekoppelt sind. Die ein oder mehreren Schnittstellen 22 können beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Die zumindest eine Schnittstelle 22 kann beispielsweise ausgebildet sein, um über ein Netzwerk oder ein lokales Verbindungsnetzwerk mit anderen Netzwerkkomponenten zu kommunizieren und um grafische Ausgaben, wie Text oder Grafiksymbole, an eine Anzeige, einen Bildschirm oder allgemein an ein grafisches Ausgabegerät zu kommunizieren.

In Ausführungsbeispielen kann die Kontrolleinheit/das Kontrollmodul 24 einem beliebigen Controller oder Prozessor oder einer programmierbaren Hardwarekomponente entsprechen. Beispielsweise kann das Kontrollmodul 24 auch als Software realisiert sein, die für eine entsprechende Hardwarekomponente programmiert ist. Insofern kann das Kontrollmodul 24 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 24 denkbar.

In zumindest manchen Ausführungsbeispielen kann das Fahrzeug 200 beispielsweise einem Landfahrzeug, einem Wasserfahrzeug, einem Luftfahrzeug, einem Schienenfahrzeug, einem Straßenfahrzeug, einem Auto, einem Bus, einem Motorrad, einem Geländefahrzeug, einem Kraftfahrzeug, oder einem Lastkraftfahrzeug entsprechen.

In Ausführungsbeispielen umfassen die Kontrollinformationen beispielsweise Kontrollleuchten, die dem Fahrer verschiedene Warnsignale oder Hinweise geben. Die Kontrollleuchten werden z.B. dynamisch auf einem Gebiet angezeigt, das sich im Sichtfeld des Fahrers befindet. Ausführungsbeispiele schaffen insofern auch ein System, das die Leuchten (Kontrollinformationen) nacheinander erscheinen und sich gegenseitig dynamisch verschieben lässt. Eine neu erscheinende Leuchte (Information) kann dabei den Platz neben (oder auch oberhalb) der zuvor erschienenen Leuchte einnehmen.

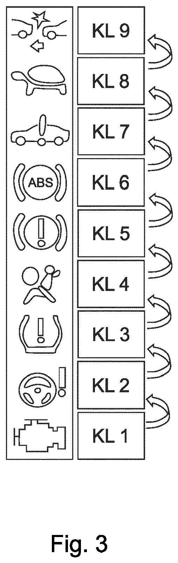

Fig. 3 zeigt eine Anordnung von Anzeigefeldern in einem Ausführungsbeispiel. Fig. 3 illustriert ein System beispielhaft anhand einer senkrechten Spalte mit neun möglichen Leuchtfeldern. Es wird, als Beispiel, eine Spalte für neun Kontrollleuchtzeichen mit den Anzeigefeldern KL1, KL2, KL3, KL4, KL5, KL6, KL7, KL8 und KL9 gewählt. In anderen Ausführungsbeispielen sind auch andere Geometrien, insbesondere eine Zeile, ein Bogen, ein Teilkreis (Halbkreis) oder ein anderer gerichteter gekrümmter Verlauf, sowie eine anderen Anzahl von Anzeigefeldern denkbar.

In Ausführungsbeispielen kann das Verfahren ein Anzeigen einer Kontrollinformation durch Darstellen eines für die Kontrollinformation typischen Grafiksymbols erfolgen, von denen in den nachfolgenden Figuren einige Beispiele dargestellt sind. Z.B. können die Kontrollinformationen ein oder mehrere Elemente der Gruppe von einem Reifendruckwarnsignal, einem Warnsignal eines Antiblockiersystems, einem Airbag-Warnsignal, einem Motorwarnsignal, einem Steuerungswarnsignal, einem Abstandswarnsignal, einem Leistungswarnsignal, einem Batteriewarnsignal und einem Handbremsenwarnsignal umfassen.

In dem Ausführungsbeispiel der Fig. 3 bleibt, wenn keine Hinweise/Warnungen vorhanden sind, die Spalte leer. Die erste Leuchte, die erscheint, wird z.B. im untersten Feld der Spalte angezeigt. Kommt eine zweite Leuchte hinzu, wird diese Leuchte ein Feld darüber angezeigt. Dieser Vorgang läuft so lange ab, bis die neunte Leuchte erscheint. Damit ist die Spalte voll, dieser Zustand ist in der Fig. 3 dargestellt. Im Detail war hier die Leuchte, die in der Fig. 3 im Anzeigefeld KL9 (Abstandswarnung) angezeigt wird, die letzte/aktuellste Kontrollinformation und wird in KL9 angezeigt, weil KL1 bis KL8 zum Zeitpunkt des Auftretens der Abstandwarnung schon belegt waren. Die älteste Leuchte ist die Motorwarnung, die in KL1 angezeigt wird. Als danach die Leuchte, die in der Fig. 3 bei KL2 (Steuerungswarnung) angezeigt wird, als zweite Leuchte auftrat, war KL1 schon besetzt und dieser Information wurde das nächste Anzeigefeld KL2 zugewiesen. Dieser Vorgang wiederholte sich dann mit den anderen Kontrollleuchten bis schließlich alle neun Leuchten übereinandergestapelt wie in der Fig. 3 gezeigt angezeigt werden. Das Verfahren 10 umfasst ein Aufbauen der dargestellten Kontrollinformationen über die benachbarten Anzeigefelder sukzessive in einer durch die Anordnung der Anzeigefelder vordefinierten Richtung.

In diesem Ausführungsbeispiel umfasst das Verfahren 10 ein Anzeigen der ältesten Kontrollinformation der zwei oder mehr Kontrollinformationen an immer der gleichen absoluten Position in dem Sichtfeld des Fahrers, nämlich in der Spalte unten. In anderen Ausführungsbeispielen sind auch andere Varianten denkbar, z.B. dass die älteste Information oben angezeigt wird oder sich die Reihenfolge nach der jüngsten Information richtet (die dann immer unten oder oben angezeigt wird).

In einem weiteren Ausführungsbeispiel können auch Leuchten verschoben werden, wenn andere Leuchten gelöscht werden, z.B. weil sich die damit verknüpfte Information erledigt hat. Das Verfahren 10 umfasst dann ein Löschen einer Anzeige einer nicht mehr relevanten Kontrollinformation aus der Anordnung. Darüber hinaus kann ein Schließen einer durch das Löschen einer Anzeige entstandenen Lücke in der Anordnung durch dynamisches Verschieben der verbleibenden Kontrollinformationen erfolgen. Verschwindet beispielsweise eine Leuchte, verschieben sich die Leuchten, die danach erschienen sind, wieder um ein Feld zurück. Das bedeutet, dass abhängig von der Anzahl der Kontrollleuchten die Position zwischen KL1 und KL9 variieren kann. Der Ort und die Ausführung sind nicht spezifisch und wurden hier nur als Beispiel dargestellt. Das Verfahren 10 umfasst in dem Ausführungsbeispiel der Fig. 3 ein Aufbauen der dargestellten Kontrollinformationen/Symbole über die benachbarten Anzeigefelder sukzessive in einer durch die Anordnung der Anzeigefelder vordefinierten Richtung. Die Anordnung kann dabei entlang verschiedenster Geometrien erfolgen. Beispielsweise sind auch gerichtete Verläufe denkbar, die sich an anderen Anzeigen im Sichtfeld anlehnen.

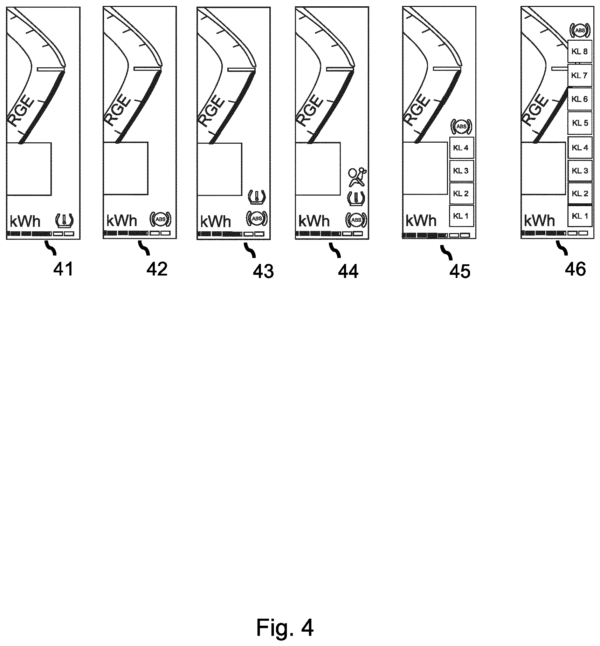

Fig. 4 zeigt eine schematische Darstellung zum Aufbau einer Anzeige von mehreren Kontrollinformationen in einem Ausführungsbeispiel. Wie die Fig. 4 zeigt, verläuft der Aufbau von links nach rechts. Es erfolgt ein Aufbauen der dargestellten Kontrollinformationen über die benachbarten Anzeigefelder sukzessive in einer durch die Anordnung der Anzeigefelder vordefinierten Richtung. Die Anordnung ist hier wiederum eine Spalte, die von unten nach oben aufgebaut wird. Zunächst wird in der Fig. 4 links eine Situation 41 dargestellt, in der nur eine Reifendruckwarnung in der Spalte unten angezeigt wird und keine andere Kontrollleuchte aktiviert ist. Die Situation 42 illustriert analog eine Anzeige einer ABS (Antiblockiersystem)-Warnung ohne weitere Kontrollleuchten unten in der Spalte. Die Fig 4 zeigt in der Darstellung 43 eine Situation, in der zunächst eine ABS-Warnung erscheint und nachfolgend eine Reifendruckwarnung, die dann im nächsten Anzeigefeld angezeigt wird. Die Situation 44 baut auf der Situation 43 auf, insofern dass zusätzlich noch eine Airbag-Warnleuchte aktiviert wird, die dann eine weitere Position höher angezeigt wird. Die aktuellste Kontrollleuchte wird in diesem Ausführungsbeispiel immer an der obersten Position in der Spalte von Anzeigefeldern angezeigt. Die Situation 45 stellt dar, dass die ABS-Warnung auf Position KL5 angezeigt wird, nachdem es schon 4 andere Kontrollleuchten auf den Positionen KL1-KL4 gegeben hat. Die Situation 46 zeigt die Anzeige, wenn das ABS-Warnsignal als neunte Kontrollleuchte aktiviert wird und auf den Positionen KL1-KL8 bereits acht andere Kontrollleuchten aktiviert sind.

Ausführungsbeispiele tragen durch die beschriebene Anordnung zu einer verbesserten Übersicht am Armaturenbrett bzw. im Sichtfeld des Fahrers bei. Dabei kann auch ein verbessertes Verständnis von zusammengehörigen textuelle Fehlermeldungen (Check Controls) und korrespondierenden Kontrollleuchten erwirkt werden, da diese für die gesamte Bandbreite an Fehlerkontrollleuchten örtlich nah zueinander gestaltet werden können. Darüber hinaus ist eine solche dynamische Anordnung platzsparend und kann zu einer Verringerung von Ablenkungen beitragen (durch gleichbleibendes Gebiet der Anzeige). Ferner wird eine nachvollziehbare Chronologie des Auftretens von Fehlern dargestellt, sodass eine Kausalitätskette ableitbar wird.

Weitere Ausführungsbeispiele sind Computerprogramme zur Durchführung eines der hierin beschriebenen Verfahren, wenn das Computerprogramm auf einem Computer, einem Prozessor, oder einer programmierbaren Hardwarekomponente abläuft. Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Verfahren zur Anzeige von Kontrollinformationen im Sichtfeld eines Fahrers eines Fahrzeugs
- 12: Anzeigen von zwei oder mehr Kontrollinformationen in einer Anordnung von benachbarten Anzeigefeldern
- 14: Anzeigen einer zeitlichen Relation eines Auftretens der zwei oder mehr Kontrollinformationen über Positionen der zwei oder mehr Kontrollinformationen innerhalb der Anordnung
- 20: Vorrichtung zur Anzeige von Kontrollinformationen im Sichtfeld eines Fahrers eines Fahrzeugs
- 22: ein oder mehrere Schnittstellen
- 24: Kontrolleinheit/Kontrollmodul
- 41-46: Anzeigesituationen
- 200: Fahrzeug
- KL1-KL9: Anzeigefelder

## Patentansprüche

1. Verfahren (10) zur Anzeige von Kontrollinformationen im Sichtfeld eines Fahrers eines Fahrzeugs (200), mit
Anzeigen (12) von zwei oder mehr Kontrollinformationen in einer Anordnung von benachbarten Anzeigefeldern (KL1-9); und **dadurch gekennzeichnet, dass**
Anzeigen (14) einer zeitlichen Relation eines Auftretens der zwei oder mehr Kontrollinformationen über Positionen der zwei oder mehr Kontrollinformationen innerhalb der Anordnung.

2. Verfahren (10) gemäß Anspruch 1, mit Anzeigen einer jüngsten Kontrollinformation an einem Ende der Anordnung und Anzeigen einer ältesten Kontrollinformation an einem anderen Ende der Anordnung.

3. Verfahren (10) gemäß Anspruch 2, mit Anzeigen der ältesten oder der jüngsten Kontrollinformation der zwei oder mehr Kontrollinformationen an immer der gleichen absoluten Position in dem Sichtfeld des Fahrers.

4. Verfahren (10) gemäß einem der Ansprüche 1 bis 3, mit Löschen einer Anzeige einer nicht mehr relevanten Kontrollinformation aus der Anordnung.

5. Verfahren (10) gemäß Anspruch 4, mit Schließen einer durch das Löschen einer Anzeige entstandenen Lücke in der Anordnung durch dynamisches Verschieben der verbleibenden Kontrollinformationen.

6. Verfahren (10) gemäß einem der Ansprüche 1 bis 5, mit Aufbauen der dargestellten Kontrollinformationen über die benachbarten Anzeigefelder (KL1-9) sukzessive in einer durch die Anordnung der Anzeigefelder (KL1-9) vordefinierten Richtung.

7. Verfahren (10) gemäß einem der Ansprüche 1 bis 6, mit Anzeigen einer Kontrollinformation durch Darstellen eines für die Kontrollinformation typischen Grafiksymbols.

8. Verfahren (10) gemäß einem der Ansprüche 1 bis 7, wobei die Kontrollinformationen ein oder mehrere Elemente der Gruppe von einem Reifendruckwarnsignal, einem Warnsignal eines Antiblockiersystems, einem Airbag-Warnsignal, einem Motorwarnsignal, einem Steuerungswarnsignal, einem Abstandswarnsignal, einem Leistungswarnsignal, einem Batteriewarnsignal und einem Handbremsenwarnsignal umfassen.

9. Computerprogramm zur Durchführung eines Verfahrens (10) gemäß einem der Ansprüche 1 bis 8, wenn das Computerprogramm auf einem Computer, einem Prozessor, oder einer programmierbaren Hardwarekomponente abläuft.

10. Vorrichtung (20) für ein Fahrzeug (200) mit einer Kontrolleinheit (24), die zur Durchführung folgender Schritte ausgebildet ist:
Anzeigen (12) von zwei oder mehr Kontrollinformationen in einer Anordnung von benachbarten Anzeigefeldern (KL1-9) im Sichtfeld eines Fahrers des Fahrzeugs; und
Anzeigen (14) einer zeitlichen Relation eines Auftretens der zwei oder mehr Kontrollinformationen über Positionen der zwei oder mehr Kontrollinformationen innerhalb der Anordnung.

11. Fahrzeug (200) mit einer Vorrichtung (20) gemäß Anspruch 10.

## Claims

1. Method (10) for displaying items of supervisory information in the field of view of a driver of a vehicle (200), comprising
displaying (12) two or more items of supervisory information in an arrangement of adjacent display fields (KL1-9); and **characterized by** displaying (14) a temporal relationship between the occurrences of the two or more items of supervisory information via positions of the two or more items of supervisory information within the arrangement.

2. Method (10) according to Claim 1, comprising displaying a newest item of supervisory information at one end of the arrangement and displaying an oldest item of supervisory information at another end of the arrangement.

3. Method (10) according to Claim 2, comprising displaying the oldest or the newest item of supervisory information from the two or more items of supervisory information always at the same absolute position in the field of view of the driver.

4. Method (10) according to one of Claims 1 to 3, comprising clearing a display of an item of supervisory information that is no longer relevant from the arrangement.

5. Method (10) according to Claim 4, comprising closing a gap in the arrangement that has arisen due to a display being cleared by dynamically moving the remaining items of supervisory information.

6. Method (10) according to one of Claims 1 to 5, comprising building up the displayed items of supervisory information over the adjacent display fields (KL1-9) in succession in a direction predefined by the arrangement of the display fields (KL1-9).

7. Method (10) according to one of Claims 1 to 6, comprising displaying an item of supervisory information by showing a graphic symbol typical of the item of supervisory information.

8. Method (10) according to one of Claims 1 to 7, wherein the items of supervisory information comprise one or more elements from the group comprising a tyre pressure warning signal, a warning signal from an antilock braking system, an airbag warning signal, an engine warning signal, a steering warning signal, a proximity warning signal, a performance warning signal, a battery warning signal and a handbrake warning signal.

9. Computer program for performing a method (10) according to one of Claims 1 to 8 when the computer program runs on a computer, a processor or a programmable hardware component.

10. Device (20) for a vehicle (200), having a control unit (24) that is designed to perform the following steps:
displaying (12) two or more items of supervisory information in an arrangement of adjacent display fields (KL1-9) in the field of view of a driver of the vehicle; and
displaying (14) a temporal relationship between the occurrences of the two or more items of supervisory information via positions of the two or more items of supervisory information within the arrangement.

11. Vehicle (200) having a device (20) according to Claim 10.

## Revendications

1. Procédé (10) d'affichage d'informations de commande dans le champ de vision d'un conducteur d'un véhicule (200), consistant à
afficher (12) deux informations de commande ou plus dans un agencement de champs d'affichage adjacents (KL1-9) ; et **caractérisé en ce qu'**il consiste à afficher (14) une relation temporelle d'une occurrence des deux informations de commande ou plus sur des positions des deux informations de commande ou plus à l'intérieur de l'agencement.

2. Procédé (10) selon la revendication 1, consistant à afficher une information de commande la plus récente à une extrémité de l'agencement et à afficher une information de commande la plus ancienne à une autre extrémité de l'agencement.

3. Procédé (10) selon la revendication 2, consistant à afficher l'information de commande la plus ancienne ou l'information de commande la plus récente des deux informations de commande ou plus, toujours à la même position absolue dans le champ de vision du conducteur.

4. Procédé (10) selon l'une quelconque des revendications 1 à 3, consistant à supprimer de l'agencement un affichage d'une information de commande qui n'est plus pertinente.

5. Procédé (10) selon la revendication 4, comprenant la fermeture d'une lacune créée par la suppression d'un affichage dans l'agencement par un déplacement dynamique des informations de commande restantes.

6. Procédé (10) selon l'une quelconque des revendications 1 à 5, consistant à établir successivement les informations de commande affichées sur les champs d'affichage adjacents (KL1-9) dans une direction prédéfinie par l'agencement des champs d'affichage (KL1-9).

7. Procédé (10) selon l'une quelconque des revendications 1 à 6, comprenant l'affichage d'une information de commande par représentation d'un symbole graphique typique de l'information de commande.

8. Procédé (10) selon l'une quelconque des revendications 1 à 7, dans lequel les informations de commande comprennent un ou plusieurs éléments du groupe constitué d'un signal d'avertissement de pression des pneus, d'un signal d'avertissement d'un système d'antiblocage, d'un signal d'avertissement de coussin gonflable, d'un signal d'avertissement moteur, d'un signal d'avertissement de commande, d'un signal d'avertissement de distance, d'un signal d'avertissement de puissance, d'un signal d'avertissement de batterie et d'un signal d'avertissement de frein à main.

9. Programme informatique pour la mise en œuvre d'un procédé (10) selon l'une quelconque des revendications 1 à 8 lorsque le programme informatique s'exécute sur un ordinateur, un processeur ou un composant matériel programmable.

10. Dispositif (20) pour un véhicule (200) comprenant une unité de commande (24) qui est conçue pour réaliser les étapes suivantes :
afficher (12) deux informations de commande ou plus dans un agencement de champs d'affichage adjacents (KL1-9) dans le champ de vision d'un conducteur du véhicule ; et
afficher (14) une relation temporelle d'une occurrence des deux informations de commande ou plus sur des positions des deux informations de commande ou plus à l'intérieur de l'agencement.

11. Véhicule (200) comprenant un dispositif (20) selon la revendication 10.
